# EUROPÄISCHE PATENTANMELDUNG

(11) **EP 1 726 221 A1**
(43) Veröffentlichungstag der Anmeldung: **29.11.2006**
(21) Anmeldenummer: 06010345.4
(22) Anmeldetag: 19.05.2006
(51) Int. Cl.: A23L 1/40, A23L 1/311

(54) **Altersklassengerechtes Instantlebensmittel und Verfahren zur Herstellung dieses Lebensmittels**

(30) Priorität: 27.05.2005 DE 102005024410
(71) Anmelder: VPF Lebensmittel GmbH & Co. KG, 31785 Hameln (DE)
(72) Erfinder: Eysel, Denis, 31785 Hameln (DE); Blümel, Petra, 31787 Hameln (DE)
(74) Vertreter: Junius, Walther

(57) **Zusammenfassung**

Die Erfindung betrifft ein altersklassengerechtes Instant-Lebensmittel und ein Verfahren zur Herstellung dieses Lebensmittels. Es ist die Aufgabe der Erfindung, ein Verfahren zur Herstellung von altersklassengerechter Instant-Nahrung und die Nahrung an sich, bereitzustellen, bei dem für jede Altersklasse, insbesondere für ältere und kranke Menschen, ein Lebensmittel produziert wird, bei dem es keiner nachträglichen Dosierung eines Nahrungszusatzes bedarf. Zudem soll das Lebensmittel appetitanregend sein. Das erfindungsgemäße Verfahren zur Herstellung dieses Lebensmittels löst die Aufgabe dadurch, dass man als Basis ein oder mehrere Grundnahrungsmittel verwendet, dass man das Nahrungsmittel zum Erhalt eines Pulvers trocknet oder trocknet und zerkleinert, dass man dosiert Nahrungsmittelzusätze zusetzt, dass man diese Zusätze homogen im Pulver verteilt und man das Pulver abpackt, bevor man es vor dem Verzehr mit Flüssigkeit anrührt. Das altersklassengerechte Instant-Lebensmittel zeichnet sich dadurch aus, dass das Lebensmittel aus einem oder mehreren zu Pulver verarbeiteten Grundnahrungsmitteln besteht, dass diesem Pulver dosiert Nahrungsmittelzusätze zugesetzt sind, dass dieser Zusatz im Pulver homogen verteilt ist, so dass die pulverisierte, ergänzte Nahrung durch Flüssigkeitszugabe zur direkten Ausgabe ohne weitere Ergänzung bereitbar ist.

## Beschreibung

Die Erfindung betrifft ein altersklassengerechtes Instant-Lebensmittel und ein Verfahren zur Herstellung dieses Lebensmittels.

Es ist allgemein bekannt, dass Menschen unterschiedlicher Altersklassen und/oder Lebenslagen eine unterschiedliche Emährungen benötigen. So verbraucht ein körperllch arbeitender Mensch mehr Kalorien als ein im Büro eine sitzende Tätigkeit ausübender Mensch. Ebenso benötigt ein älterer Mensch eine andere Speisenzusammensetzung als ein jüngerer Mensch. Zwar können selbständig sich versorgende Personen ihre Ernährung auf diese unterschiedlichen Bedürfnisse einstellen, schwieriger aber gestaltet sich die Ernährung von älteren und/oder pflegebedürftigen Menschen, die sich ihr Essen nicht mehr selbst zubereiten können. Diese pflegebedürftigen Personen sind auf das in Großküchen zubereitete Essen angewiesen, welches durch einen Essen-Bringdienst direkt zu den Personen nach Hause ausgefahren wird oder in einer Pflege-/Krankeneinrichtung stationär gereicht wird. In Großküchen werden pro Tag Hundsrte von Essen zubereitet, was zur Folge hat, dass die einzelne Portion nicht exakt auf die Bedürfnisse jeden einzelnen Bewohners bzw. Beziehers abgestimmt werden kann.

Aber gerade kranke oder ältere Menschen führen aus ernährungsphysiologischer Sicht unzureichend Nahrung zu: beispielsweise verbraucht ein an Demenz erkrankter Mensch in etwa doppelt so viele Kalorien wie ein nicht an Demenz erkrankter Mensch. Ältere oder erkrankte Menschen leiden oftmals an Appetitlosigkeit, zudem an Schluckproblemen und eingeschränkter Kaufähigkeit (Protesen etc.), so dass der tägliche Kalorienbedarf und die ernährungsphysiologisch notwendigen Nahrungskomponenten nicht über die angebotene Nahrung zugeführt werden können. Die Folge hieraus ist eine Mangelernährung durch eine zu geringe Energie- und/oder Vitamin-und Mineralstoffaufnahme. Ebenso werden insbesonders Vollkornprodukte, Obst und Gemüse aufgrund der oben dargestellten Problematik zu wenig aufgenommen, so dass die Ballaststoffaufnahme ebenfalls zu gering ist.

Aufgrund des im Jahre 2000 eingeführten Pflegequalitätssicherungsgesetzes, welches die Überwachung und Dokumentation des Ernährungszustandes von Altenheim(pflege-)bewohnern vorschreibt, ergeben sich immer differenziertere Anforderungen an die Zusammensetzung der Ernährung. Diese Anforderungen werden in Altenheimen von Pflegekräften "auf Station" festgestellt und an die Küche weitergeleitet.

Daher ist es üblich, dass ein Koch einer solchen Großküche, bei der industriell vorgefertigte Nahrungsmittelprodukte aufbereitet werden, in die gesondert gekennzeichneten Essen einen Nahrungsergänzungsstoff zusetzt, der diesen Ernährungsmangel ausgleichen soll. Dieses Zusetzen erfordert jedoch von dem Küchenpersonal einen zusätzlichen Arbeitsschritt, der viel Zeit kostet und umständlich ist. Es kann zu Verwechslungen der Portionen kommen, oder in der Eile und Hektik im Betrieb einer Großküche werden die Zusatzmengen des Nahrungszusatzes nicht richtig dosiert. In der Küche muss der jeweilige Nahrungszusatz vorrätig sein, was die Organisation der Küche und das Raumangebot strapaziert. Daher ergibt es sich, dass ein Koch die Anforderungen an die Ernährung durch standardmäßige Zubereitung nicht zufriedenstllend erfüllen kann.

Die Erfindung vermeidet die Nachteile des Standes der Technik. Es ist die Aufgabe der Erfindung, ein Verfahren zur Herstellung eines altersklassengerechten Instant-Lebensmittels und das Lebensmittel an sich bereitzustellen, das für bestimmte Altersklassen ernährungsphysiologisch gerecht ist, so dass es insbesondere ältere und kranke Menschen keiner nachträglichen Dosierung eines Nahrungszusatzes bedarf. Zudem soll das Lebensmittel appetitanregend sein.

Das erfindungsgemäße Verfahren zur Herstellung dieses Lebensmittels löst die Aufgabe dadurch, dass man als Basis ein oder mehrere pulverisierbare Grundnahrungsmittel verwendet, dass man das Nahrungsmittel zum Erhalt eines Pulvers trocknet oder trocknet und anschließend zu Pulver zerkleinert, dass man dosiert Nahrungsmittelzusätze zusetzt, dass man diese Zusätze homogen im Pulver verteilt und man das Pulver abpackt, bevor man es vor dem Verzehr mit Flüssigkeit anrührt.

Somit ist ein Verfahren geschaffen, bei dem in einem der ersten Verfahrensschritte ernährungsphysiologisch wichtige Komponente(n) dem Nahrungsmittelpulver zugesetzt und verteilt werden, so dass das in einer Küche aufzubereitende Fertigprodukt keiner weiteren Ergänzung als der Flüssigkeitszugabe bedarf. Dieses spart Zeit und unterbindet Fehler in der Zubereitung.

Die Nahrungsmittelzusätze können jederzeit innerhalb des Verfahrensablaufes zugesetzt werden. Die Zusätze sind je nach Altersklassenbestimmung des Lebensmittels in Menge und Zutat zu wählen.

Vorteilhaft ist es, wenn man zur Trocknung als verarbeitungsfähiges Grundnahrungsmittel Gemüse, Obst oder Fleisch oder auf Getreide und Milch basierendes Nahrungsmittel verwendet. Getreide und Gemüse sind gut verarbeitungsfähig und ist als Grundnahrungsmittel einer gesundheitsbewussten Ernährung als Basis zugrunde zu legen. Es kann eine einzige Gemüseart verwendet werden, es können aber auch verschiedene Gemüse gemeinsam oder getrennt für ein Lebensmittel verarbeitet werden. Als Gemüse können beispielsweise zerriebene Kartoffeln, Lauch Pilze, Kohl, rote Beete, Rüben und/oder Karotten oder eine Mischung aus diesen verwendet werden. Hieraus sind beispielsweise Gemüse- oder Fleischsuppen herzustellen. Auf Getreidebasis und mit Milch zubereitbar kommen beispielsweise Milchreis, Grießbrei, Dessert oder Milchshakes in Betracht.

Vorteilhaft ist es, wenn man dem Pulver dosiert Mineralstoffe, Gewürze, Ballaststoffe, hochkalorische Stoffe und/oder Vitamine zusetzt, bevor man dann das Pulver abpackt. Oftmals herrscht bei den älteren Menschen zum Kalorienmangel zusätzlich ein Mangel an Mineralen, Vitaminen und/oder Spurenelementen. So können sämtliche Nahrungsergänzungsstoffe, die geeignet sind, einem Pulver zugesetzt zu werden und die untereinander keine negativen Wechselwirkungen hervorrufen, erfindungsgemäß als Verfahrensschritt in das Pulver eingebracht werden.

Je nach gewünschter Geschmacksrichtung können ebenfalls der Mischung vor oder nach dem Mischvorgang dosiert Kakao, Schokolade und/oder Trockenobst zugesetzt werden. Gleiches gilt für lebensmittelfärbende Zusätze, pflanzliches und/oder tierisches Eiweiß sowie für Appetit- und/oder geschmacksverstärkende Komponenten.

Mit zunehmendem Alter lassen Geschmacks- und Geruchserkennung nach. Damit die Speisen dennoch von älteren Menschen als appetitlich empfunden werden und gerne in ausreichender Menge gegessen werden, ist es für ein seniorengerechtes Lebensmittel vorteilhaft, wenn man die geschmacksgebenden Komponenten als Zusätze überdosiert.

Als appetitanregend haben sich für ältere Menschen ebenfalls ungewöhnliche Kombinationen von Grundnahrungsmittelbrei oder -Suppe mit einem Gewürz- oder einer Gewürzmischung herausgestellt,

Besonders vorteilhaft ist es, wenn man als geschmacksgebende Komponente eines derartiges Aroma hinzugibt, das aus den Kindertagen des Senioren bekannt ist. Dieses vermittelt dem Senioren positive Erinnerungen und steigert hierdurch das Wohlbefinden und somit den Appetit des Senioren.

Das Instant-Lebensmittel kann als Zusatz Hopfenextrakt enthalten. Das Hopfenextrakt entfaltet beruhigende Wirkung nach Aufnahme des Lebensmittels.

Vorteilhaft ist es, wenn man dem Pulver vor dem Mischvorgang wasserbindende Zusätze zusetzt.

Eigenschaften des seniorengerechten Nahrungsmittels, die im obigen Verfahrensabschnitt beschrieben sind, sind ergänzend zur der nachfolgenden Produktbeschreibung heranzuziehen.

Das altersklassengerechte Instant-Lebensmittel zeichnet sich dadurch aus, dass das Lebensmittel aus einem oder mehreren zu Pulver verarbeiteten Grundnahrungsmitteln besteht, dass diesem Pulver dosiert Nahrungsmittelzusätze zugesetzt sind, dass dieser Zusatz im Pulver homogen verteilt ist, so dass die pulverisierte, ergänzte Nahrung durch Flüssigkeitszugabe zur direkten Ausgabe ohne weitere Ergänzung bereitbar ist.

Somit ist ein in einer Großküche oder auch privat zur Pflege zu verwendendes Fertigprodukt als Nahrungsmittel zur Verfügung gestellt, das sofort nach Flüssigkeitszugabe ohne weitere Zugabe und Dosierung von emährungsphysiologisch wichtigen Komponenten dem Patienten als Speise gereicht werden kann. Der Mangel an Nahrungsaufnahme und an altersklassenbedingten emährungsphysiologisch wichtigen Komponenten ist durch sensorisch und in der Zusammensetzung geeignete Fertigkost ausgleichbar, ohne dass der Koch einer Großküche zusätzliche Arbeitsschritte durch nachträgliches Zugeben eines Zusatzes oder Pürieren hat. Der Arbeits- und Zeitaufwand in einer Großküche ist enorm verringert. Auch die Privatperson kann sich schnell und ohne Aufwand durch einfache Zugabe von Flüssigkeit eine nahrhafte Speise zubereiten. Daher ist es nun auch stark bewegungseingeschränkten Personen ermöglicht, ohne fremde Hilfe Ihre Speise zuzubereiten.

Zweckmäßig ist es, wenn das zu Pulver verarbeitungsfähige Grundnahrungsmittel Gemüse, Obst oder Fleisch oder ein auf Getreide und Milch basierendes Nahrungsmittel ist. Diese Grundnahrungsmittel sind für die Ernährung physiologisch wichtig und daher ist es angebracht, diese als Basis für das Pulver zugrunde zu legen. Dem Pulver können alle Nahrungszusätze in verschiedenen Mengen zugesetzt sein, die sich ernährungsphysiologisch für die jeweilige Zieigruppe als notwendig oder sinnvoll erweisen. Dieses können beispielsweise Minerale und/oder Vitamine und/oder Spurenelemente und/oder hochkalorische Zusätze sein. Für jede Altersklassen ist somit durch altersklassengerechte Zusätze in geeigneter Dosierung jeglicher ernährungsbedingter Mangel ausgleichbar, ohne dass es eines aktiven Zutuns durch weitere Arbeitsschritte der Mitarbeiter einer Großküche oder einer Pflegeeinrichtung bedarf. Es ist lediglich das Fertigerzeugnis Instant-Pulver mit Flüssigkeit anzurühren, wobei manche Speisen eine kurze Zeit zum Ziehen benötigen.

Um den Appetit des Menschen zu steigern, so dass er das Lebensmittel in ausreichender Menge zu sich nimmt, ist es vorteilhaft, wenn das Pulver dosiert Appetit- und/oder geschmacksverstärkende Komponenten oder lebensmittslfärbende Zusätze oder tierisches oder pflanzliches Eiweiß oder Ballaststoffe als Zusätze enthält.

Das Lebensmittel kann ebenfalls aus zwei oder mehreren unterschiedlichen mit Flüssigkeit anzurührenden Pulvern bestehen.

Der Appetit und die Esslust von älteren Menschen kann dadurch gesteigert werden, wenn für ein seniorengerechtes Lebensmittel die geschmacksgebenden Komponenten als Zusätze überdosiert zugesetzt sind. Denn mit zunehmendem Alter lassen Geschmacks- und Geruchserkennung nach. Speisen werden als fade, zu wenig gewürzt und als aromaarm empfunden. Durch eine unübliche Überdosierung an geschmacksgebenden Komponenten ist die nachlassende Geschmacks- und Geruchserkennung überwunden. Das Lebensmittel erscheint für den älteren Menschen nun wieder schmackhaft, so dass diese die Speise gerne und in notwendiger Menge essen.

Es ist zweckmäßig, wenn das aus dem Pulver herzustellende Lebensmittel eine erhöhte Nährstoffdichte aufweist. Durch die erhöhte Nährstoffdichte kann auch mit kleineren Portionen der Nahrungsbedarf gedeckt werden. Die erhöhte Nährstoffdichte kann mit weiteren Nahrungsmittelzusätzen kombiniert sein.

Für Senioren hat es sich als appetitfördernd und als wohltuend erwiesen, wenn als geschmacksgebende Komponente ein derartigen Duftstoff oder eine derartige geschmacksgebende Komponente vorhanden ist, der den Senioren aus Kindertagen bekannt ist. Gerade die Psyche des älteren Menschen, die durch positive Erinnerungen angeregt wird, fördert das allgemeine Wohlbefinden des Senioren und somit auch seinen Appetit.

## Patentansprüche

1. Verfahren zur Herstellung eines altersklassengerechten Instant-Lebensmittels,
**dadurch gekennzeichnet,**
**dass** man als Basis ein oder mehrere Grundnahrungsmittel verwendet,
**dass** man das Nahrungsmittel zum Erhalt eines Pulvers trocknet oder trocknet und zu Pulver zerkleinert,
**dass** man dosiert Nahrungsmittelzusätze zusetzt,
**dass** man diese Zusätze homogen im Pulver verteilt und
bevor man das Pulver abpackt und vor dem Verzehr mit Flüssigkeit wieder anrührt.

2. Verfahren nach Anspruch 1,
**dadurch gekennzeichnet,**
**dass** man zur Trocknung als zu Pulver verarbeitungsfähige
Grundnahrungsmittel Gemüse, Obst oder Fleisch oder auf Getreide und
Milch basierendes Nahrungsmittel verwendet.

3. Verfahren nach einem der vorangehenden Ansprüche,
**dadurch gekennzeichnet,**
**dass** man dem Pulver dosiert Gewürze, Ballaststoffe, Minerale, Vitamine und/oder hochkalorische Stoffe zusetzt.

4. Verfahren nach einem der vorangehenden Ansprüche,
**dadurch gekennzeichnet,**
**dass** man dem Pulver dosiert appetit- und/oder geschmacksverstärkende Komponenten zusetzt.

5. Verfahren nach einem der vorangehenden Ansprüche,
**dadurch gekennzeichnet,**
**dass** man dem Pulver dosiert lebensmittelfärbende Zusätze zusetzt.

6. Verfahren nach einem der vorangehenden Ansprüche,
**dadurch gekennzeichnet,**
**dass** man dem Pulver tierisches und/oder pflanzliches Eiweiß zusetzt.

7. Verfahren nach einem der vorangehenden Ansprüche,
**dadurch gekennzeichnet,**
**dass** man vor der Abfüllung des Pulvers zwei oder mehrere verschiedene Pulver vermischt.

8. Verfahren nach einem der vorangehenden Ansprüche,
**dadurch gekennzeichnet,**
**dass** man der Mischung vor dem Mischvorgang als Zusätze Kakao, Schokolade, Marmelade, Trockenobst zusetzt.

9. Verfahren nach einem der vorangehenden Ansprüche,
**dadurch gekennzeichnet,**
**dass** man für ein seniorengerechtes Lebensmittel die geschmacksgebenden Komponenten als Zusätze überdosiert.

10. Verfahren nach Anspruch 9,
**dadurch gekennzeichnet,**
**dass** man als geschmacksgebende Komponente ein derartiges Aroma
oder eine derartige geschmacksgebende Komponente hinzugibt, das aus den Kindertagen des Senioren bekannt ist.

11. Verfahren nach einem der vorangehenden Ansprüche,
**dadurch gekennzeichnet,**
**dass** man der Mischung vor dem Mischvorgang wasserbindende Zusätze zusetzt.

12. Verfahren nach einem der vorangehenden Ansprüche,
**dadurch gekennzeichnet,**
**dass** man als Flüssigkeiten Wasser, Milch, Sahne, Fruchtsaft oder Brühe oder Mischungen von diesen zugibt.

13. Altersstufengerechtes Instant-Lebensmittel,
**dadurch gekennzeichnet,**
**dass** das Lebensmittel aus einem oder mehreren zu Pulver verarbeiteten Grundnahrungsmitteln besteht,
**dass** diesem Pulver dosiert Nahrungsmittelzusätze zugesetzt sind,
**dass** dieser Zusatz im Pulver homogen verteilt ist,
so dass die pulverisierte, ergänzte Nahrung durch Flüssigkeitszugabe zur direkten Ausgabe ohne weitere Ergänzung bereitbar ist.

14. Lebensmittel nach Anspruch 13,
**dadurch gekennzeichnet,**
**dass** das zu Pulver verarbeitungsfähige Grundnahrungsmittel Gemüse,
Obst oder Fleisch oder auf Getreide und Milch basierendes Nahrungsmittel ist.

15. Lebensmittel nach Anspruch 13,
**dadurch gekennzeichnet,**
**dass** das mit Flüssigkeit aufbereitbare Pulver dosiert zugesetzte Minerale und/oder Vitamine und/oder hochkalorische Stoffe und/oder Ballaststoffe enthält.

16. Lebensmittel nach Anspruch 13-15,
**dadurch gekennzeichnet,**
**dass** das Pulver dosiert Appetit- und/oder geschmacksverstärkende Komponenten als Zusätze enthält.

17. Lebensmittel nach Anspruch 13-15,
**dadurch gekennzeichnet,**
**dass** das Pulver dosiert lebensmittelfärbende Zusätze enthält,

18. Lebensmittel nach Anspruch 13-15,
**dadurch gekennzeichnet,**
**dass** das Pulver tierisches oder pflanzliches Eiweiß enthält.

19. Lebensmittel nach Anspruch 13,
**dadurch gekennzeichnet,**
**dass** das Lebensmittel aus zwei oder mehreren unterschiedlichen Pulvern besteht.

20. Lebensmittel nach Anspruch 13,
**dadurch gekennzeichnet,**
**dass** für ein seniorengerechtes Lebensmittel die geschmacksgebenden Komponenten als Zusätze überdosiert zugesetzt sind.

21. Lebensmittel nach Anspruch 20,
**dadurch gekennzeichnet,**
**dass** als geschmacksgebende Komponente ein derartigen Duftstoff oder eine derartige geschmacksgebende Komponente vorhanden ist, der den Senioren aus Kindertagen bekannt ist.

22. Lebensmittel nach Anspruch 13,
**dadurch gekennzeichnet,**
**dass** der Mischung vor dem Mischvorgang als Zusätze Kakao, Schokolade, Marmelade oder Trockenobst zugesetzt sind.
